# EUROPÄISCHE PATENTSCHRIFT

(11) **EP 0 566 007 B1**
(45) Veröffentlichungstag und Bekanntmachung des Hinweises auf die Patenterteilung: **28.06.1995**
(21) Anmeldenummer: 93105708.7
(22) Anmeldetag: 06.04.1993
(51) Int. Cl.: F16D 65/56

(54) **Druckluftbetätigte Scheibenbremse**
Air operated disc brake
Frein à disque actionné par air comprimé

(30) Priorität: 13.04.1992 DE 4212353
(43) Veröffentlichungstag der Anmeldung: 20.10.1993
(73) Patentinhaber: KNORR-BREMSE Systeme für Nutzfahrzeuge GmbH, 80809 München (DE)
(72) Erfinder: Baumgartner, Hans, W-8052 Moosburg (DE); Iraschko, Johann, W-8069 Schweitenkirchen (DE)
(74) Vertreter: KUHNEN, WACKER & PARTNER

(56) Entgegenhaltungen:
- DE-A- 1 530 980
- DE-A- 3 716 202

## Beschreibung

Die Erfindung bezieht sich auf eine druckluftbetätigte Scheibenbremse gemäß dem Oberbegriff des Anspruchs 1, die insbesondere für Straßenfahrzeuge und vorzugsweise für Nutzfahrzeuge vorgesehen ist.

Druckluftbetätigte bzw. pneumatische Scheibenbremsen der gattungsgemäßen Art sind beispielsweise aus der **DE-OS 37 16 202** sowie aus der nicht vorveröffentlichten **DE-OS 40 32 885** bekannt. Bei diesen bekannten Scheibenbremsen wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen diese gedrückt wird, worauf sich der Bremssattel aufgrund der Reaktionskräfte in Gegenrichtung verschiebt und dadurch eine auf der gegenüberliegenden Seite befindliche Bremsbacke gleichfalls gegen die Bremsscheibe preßt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der zwei mit einem Außengewinde versehene Stellspindeln in einem jeweils zugeordneten Innengewinde der Traverse in paralleler Anordnung verstellbar verschraubt sind.

Die beiden Stellspindeln wirken jeweils über ein an ihrem bremsscheibenseitigen Ende sitzendes Druckstück auf die zuspannseitig im Bremssattel bezüglich der Bremsscheibe verschiebbar gelagerte Bremsbacke ein. Mittels einer Nachstelleinrichtung, die drehfest mit einer der beiden Stellspindeln gekoppelt ist und bei jeder Betätigung des Drehhebels über eine Rutschkupplung auf die betreffende Stellspindel einwirkt, wird ereicht, daß das sich infolge Belagverschleiß ändernde Lüftspiel seinen korrekten Sollwert konstant beibehält. Die von der Nachstelleinrichtung im Falle von Belagverschleiß bewirkte Drehung der genannten Stellspindel wird von einer Synchronisationseinrichtung, bei der es sich beispielsweise um eine mit einer jeweiligen Verzahnung in Eingriff stehenden Kette handeln kann, so auf die andere Stellspindel übertragen, daß diese um den gleichen Winkel gedreht wird und folglich ihren Abstand zur Bremsscheibe um exakt die gleiche Wegstrecke verringert.

Eine derartige, mit zwei Spindeln versehene bzw. "zweispindelige" Zuspannvorrichtung zeichnet sich gegenüber einer "einspindeligen" Ausführungsform prinzipiell zwar dadurch aus, daß der Minimalwert des Umfangsschrägverschleißes, d.h. der ungleichmäßigen Abnutzung der Bremsbacken in tangentialer oder Umfangsrichtung der Bremsscheibe, aufgrund der in dieser Belastungsrichtung doppelten Abstützung relativ gut ist. Gleichwohl ist der bei den bekannten zweispindeligen Zuspannvorrichtungen erzielbare minimale Umfangsschrägverschleiß im Hinblick auf eine Optimierung der Standzeit der Scheibenbremse noch verbesserungswürdig.

Der Erfindung liegt die Aufgabe zugrunde, eine druckluftbetätigte Scheibenbremse gemäß dem Oberbegriff des Anspruchs 1 derart weiterzubilden, daß bei möglichst geringem Aufwand eine Minimierung des Umfangsschrägverschleißes erzielbar ist.

Diese Aufgabe wird erfindungsgemäß mit den im Kennzeichnungsteil des Anspruchs 1 angegebenen Maßnahmen gelöst.

Erfindungsgemäß ist demzufolge die Synchronisationseinrichtung mit den zwei Stellspindeln derart gekoppelt, daß der Abstand zur Bremsscheibe der bezogen auf die Drehrichtung der Bremsscheibe auslaufseitig befindlichen Stellspindel um ein vorbestimmtes Maß geringer als der Abstand der anderen Stellspindel ist. Ausführliche Untersuchungen haben nämlich gezeigt, daß die Bremsscheibe unmittelbar bei Beginn der Zuspannung der beiden Stellspindeln auf die einlaufseitig gelegenen Bereiche der Bremsbacken einen etwas größeren Druck ausübt, so daß diese Bereiche langfristig stärker verschleißen, was zu dem eingangs genannten Umfangsschrägverschleiß führt. Mit dem erfindungsgemäß unterschiedlich eingestellten Abstand bzw. Axialversatz der beiden Stellspindeln wird nun erreicht, daß die Bremsbacken bei Beginn der Zuspannung zunächst an ihren auslaufseitig gelegenen Bereichen mit der Bremsscheibe in Kontakt geraten, so daß dort ein entsprechender Abrieb auftritt, der bei exakter Einstellung des Radialversatzes den Abrieb der einlaufseitig gelegenen Bereiche genau zu kompensieren vermag. Infolgedessen kann bei optimaler Justierung jeglicher Umfangsschrägverschleiß vermieden werden, wobei die dadurch gewonnene Verlängerung der Standzeit der Scheibenbremse die Herstellungskosten praktisch nicht beeinflußt.

Die jeweils geeignete Größe des Axialversatzes der beiden Stellspindeln hängt von der Art des jeweils verwendeten Bremsbelags ab und läßt sich beispielsweise durch Werksversuche leicht ermitteln; dem Wartungspersonal kann somit eine Tabelle zur Verfügung gestellt werden, aus der für jeden gängigen Bremsbelag ein entsprechender Axialversatzwert abgelesen werden kann. In diesem Zusammenhang ist es von Vorteil, wenn gemäß der im Anspruch 2 angegebenen Weiterbildung der Erfindung eine manuell betätigbare Einstellvorrichtung, mittels der der Axialversatz der zwei Stellspindeln justiert werden kann, und wenn gemäß Anspruch 3 ferner eine Skala zur Anzeige des mittels der Einstellvorrichtung jeweils eingestellten Axialversatzes der zwei Stellspindeln vorgesehen wird. Gegebenenfalls ist es auch möglich, an dieser Skala unmittelbar den Bremsbelag-Typ anzugeben.

Gemäß einem weiteren, im kennzeichnenden Teil des Anspruchs 4 angegebenen unabhängigen Aspekt der Erfindung kann die ihr zugrundeliegende Aufgabe alternativ auch dadurch gelöst werden, daß die Steigung des Gewindes der bezogen auf die Drehrichtung der Bremsscheibe auslaufseitig befindlichen Stellspindel um ein vorbestimmtes Maß größer gemacht wird als die Steigung des Gewindes der anderen Stellspindel. Diese Art der Kompensation des Schrägverschleißes hat darüber hinaus den Vorteil, daß mit zunehmendem Belagverschleiß eine gewisse Progression im Ausmaß des unterschiedlichen Abstands zur Bremsscheibe auftritt, die das jeweils unterschiedliche Abriebverhalten der Bremsbeläge in Abhängigkeit von deren Verschleißzustand kompensieren kann.

Gemäß Anspruch 5 kann der Unterschied im Steigungsmaß der beiden Stellspindeln beispielsweise so gewählt werden, daß sich die auslaufseitig befindliche Stellspindel - bezogen auf den vollen Stellweg - um ca. 1 mm weiter bewegt als die andere Stellspindel. Selbstverständlich ist es auch möglich, sowohl die vorgenannte unterschiedliche Kopplung der beiden Stellspindeln als auch eine abweichende Steigung der Gewinde vorzusehen.

Die Erfindung wird nachstehend anhand der Beschreibung von Ausführungsbeispielen unter Bezugnahme auf die Zeichnung näher erläutert. Es zeigen:
**Fig. 1** anhand eines Querschnitts den schematischen Aufbau der Zuspannvorrichtung; und
**Fig. 2** einen Längsschnitt der in Fig. 1 gezeigten Zuspannvorrichtung.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden.

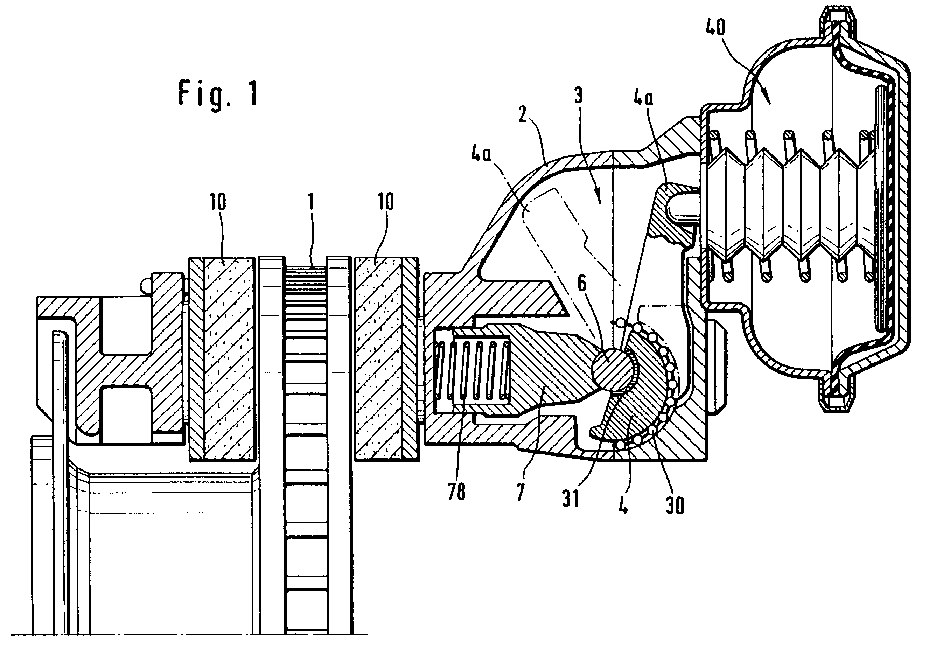

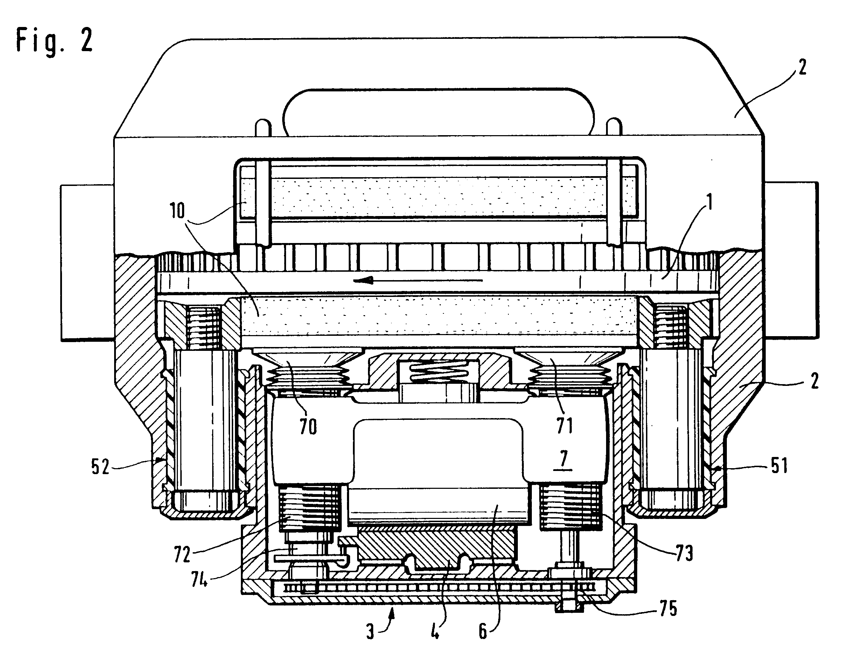

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig. 2 mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete zweispindelige Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt. Es sei angemerkt, daß die Betätigung des Drehhebels 4 selbstverständlich auch über ein Bremsgestänge erfolgen kann, so daß der Bremszylinder 40 gegebenenfalls an einem anderen Ort plaziert werden kann, falls der Einbauraum für die Bremsscheibe begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Schraubenfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

Wie insbesondere dem Längsschnitt der Fig. 2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an einer Bremsbacke 10 an. Die Bremsbacke 10 ist insbesondere in Umfangsrichtung zur Bremsscheibe 1 über nicht gezeigte Halterungen quer zur Bremsscheibe 1 verschiebbar geführt, wobei die Halterungen entweder dem Bremssattel 2 oder einem Bremsträger zugeordnet sein können.

Im Inneren der Stellspindel 72 ist eine Nachstelleinrichtung 74 angeordnet, die infolge einer Axialverzahnung drehfest mit der Stellspindel 72 gekoppelt und in axialer Richtung verschiebbar ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Erfindungsgemäß ist die Synchronisationseinrichtung 75 so eingestellt, daß die zwei Stellspindeln derart gekoppelt werden, daß der Abstand zur Bremsscheibe 1 der bezogen auf die in Fig.2 schematisch mit einem Pfeil angedeuteten Drehrichtung der Bremsscheibe 1 auslaufseitig befindlichen Stellspindel 72 um ein vorbestimmtes Maß geringer als der Abstand der anderen Stellspindel 73 ist. Das jeweilige Maß des hierdurch erzielten unterschiedlichen Abstands bzw. Axialversatzes der beiden Stellspindeln wird dabei so gewählt, daß der bei Beginn der Zuspannung auftretende verstärkte Abrieb der einlaufseitig gelegenen Bereiche der Bremsbacken 10 genau kompensiert werden kann. Somit kann bei optimaler Justierung jeglicher Umfangsschrägverschleiß vermieden werden, so daß die Standzeit der Scheibenbremse entsprechend verlängert wird.

Obgleich dies nicht gezeigt ist, kann erfindungsgemäß ferner eine manuell betätigbare Einstellvorrichtung vorgesehen werden, mittels der der Axialversatz der zwei Stellspindeln vom Wartungspersonal unter Anpassung an den jeweils verwendeten Bremsbelag justiert werden kann. Darüber hinaus ist es möglich, eine Skala zur Anzeige des mittels der Einstellvorrichtung jeweils eingestellten Axialversatzes der zwei Stellspindeln vorzusehen, wobei diese Skala ggf. unmittelbar den Bremsbelag-Typ anzeigen kann.

Alternativ oder zusätzlich zu dem beschriebenen Axialversatz der beiden Stellspindeln ist es auch möglich, die Steigung des Gewindes der bezogen auf die Drehrichtung der Bremsscheibe auslaufseitig befindlichen Stellspindel 72 um ein vorbestimmtes Maß größer als die Steigung des Gewindes der anderen Stellspindel 73 zu wählen, so daß ebenfalls eine optimale Ausnutzung der Bremsbeläge infolge minimierten Schrägverschleißes erzielbar ist. In der Praxis hat es sich gezeigt, daß ein Unterschied im Steigungsmaß der beiden Stellspindeln z.B. so gewählt werden kann, daß sich die auslaufseitig befindliche Stellspindel - bezogen auf den vollen Stellweg - um ca. 1 mm weiter bewegt.

Nachfolgend wird das Arbeitsprinzip der erfindungsgemäßen Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm beträgt) die Bremsbacke 10 gegen die Bremsscheibe 1, wobei das auslaufseitig gelegene Druckstück 70 entsprechend der Lehre der Erfindung den von ihr beaufschlagten Bereich der Bremsbacke 10 noch vor dem einlaufseitig gelegenen Bereich gegen die Bremsscheibe 1 drückt. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird. Da das Außengewinde der Stellspindeln 72 und 74 und das jeweils zugeordnete Innengewinde der Traverse 7 so dimensioniert sind, daß im druckbeaufschlagten Zustand entgegen der Zuspannrichtung eine Selbsthemmung auftritt, können sich die Stellspindeln nicht in diese Richtung wegbewegen, so daß der Bremsdruck solange aufrechterhalten bleibt, bis der Drehhebel 4 freigegeben wird.

Wenn die beiden Bremsbacken 10 im Verlauf des vorstehend erläuterten Zuspannvorgangs um eine vorbestimmte, einem Soll-Lüftspiel entsprechende Strecke verschoben worden sind, wird die Nachstelleinrichtung 74 vom Drehhebel 4 betätigt. Sofern das Lüftspiel korrekt eingestellt ist, liegen beide Bremsbacken 10 zu diesem Zeitpunkt an der Bremsscheibe 1 an. Infolgedessen spricht eine in der Nachstelleinrichtung 74 vorgesehene Rutschkupplung an, so daß die Stellspindel 72 und die mit ihr synchronisierte Stellspindel 73 nicht verstellt werden. Wenn demgegenüber ein zu großes Lüftspiel vorliegt, was beispielsweise nach einem Belagwechsel oder bei zunehmendem Verschleiß der Bremsbacken der Fall ist, werden die Stellspindeln 72 und 73 von der Nachstelleinrichtung 74 um eine bestimmte Strecke gedreht und bringen dadurch das Lüftspiel, gegebenenfalls nach mehrmaliger Betätigung der Bremse, auf den Sollwert. Auf diese Weise ist gewährleistet, daß die erfindungsgemäße Scheibenbremse bis zum vollständigen Abrieb der Bremsbacken 10 funktionsfähig bleibt.

Bei der erläuterten Ausführungsform der Zuspannvorrichtung 3 erfolgt die Kraftübersetzung mittels eines drehbar gelagerten Hebels 4, der über einen Exzenter auf eine Traverse 7 einwirkt; das Prinzip der Erfindung ist jedoch selbstverständlich auch bei anderen Zuspannvorrichtungen verwendbar, etwa bei solchen, bei denen die Kraftübersetzung mittels eines Spreizkeils oder einer Kugelrampe erfolgt. Ebenso ist die Erfindung nicht auf die gezeigten Ausführungsformen von Stellspindel und Nachstelleinrichtung beschränkt; das angegebene Prinzip der Vorhaltung gegen Schrägverschleiß kann vielmehr bei allen Stellelementen angewandt werden, deren axiale Relativlage zur Bremsscheibe mit zunehmendem Belagverschleiß von einer geeigneten Antriebseinrichtung verändert wird.

## Patentansprüche

1. Druckluftbetätigte Scheibenbremse mit einem eine Bremsscheibe *(1)* umfassenden Bremssattel *(2)*, auf dessen einer Seite eine Zuspannvorrichtung *(3)* angeordnet ist, die bei Druckluftbeaufschlagung zwei in Parallelanordnung verstellbar angeordnete Stellspindeln *(72, 73)* betätigt, die jeweils über ein an ihrem bremsscheibenseitigen Ende sitzendes Druckstück *(70, 71)* auf eine zuspannseitig im Bremssattel *(2)* bezüglich der Bremsscheibe *(1)* verschiebbar gelagerte Bremsbacke *(10)* einwirken und die über eine Synchronisationseinrichtung *(75)* drehfest miteinander gekoppelt sind, wobei eine Nachstelleinrichtung *(74)* auf eine *(72)* der zwei Stellspindeln *(72, 73)* derart einwirkt, daß das sich infolge Belagverschleiß ändernde Lüftspiel im wesentlichen konstant bleibt,
***dadurch gekennzeichnet***,
daß die Synchronisationseinrichtung *(75)* die zwei Stellspindeln *(72, 73)* derart koppelt, daß der Abstand zur Bremsscheibe *(1)* der bezogen auf die Drehrichtung der Bremsscheibe *(1)* auslaufseitig befindlichen Stellspindel *(72)* um ein vorbestimmtes Maß geringer als der Abstand der anderen Stellspindel *(73)* ist.

2. Druckluftbetätigte Scheibenbremse nach Anspruch 1, ***dadurch gekennzeichnet***, daß eine manuell betätigbare Einstellvorrichtung vorgesehen ist, mittels der das Maß des unterschiedlichen Abstands der zwei Stellspindeln *(72, 73)* justierbar ist.

3. Druckluftbetätigte Scheibenbremse nach Anspruch 2, ***dadurch gekennzeichnet***, daß eine Skala zur Anzeige des Maßes des mittels der Einstellvorrichtung jeweils eingestellten unterschiedlichen Abstands der zwei Stellspindeln *(72, 73)* vorgesehen ist.

4. Druckluftbetätigte Scheibenbremse nach einem der vorangehenden Ansprüche, insbesondere nach dem Oberbegriff des Anspruchs 1, ***dadurch gekennzeichnet***, daß die Steigung des Gewindes der bezogen auf die Drehrichtung der Bremsscheibe *(1)* auslaufseitig befindlichen Stellspindel *(72)* um ein vorbestimmtes Maß größer als die Steigung des Gewindes der anderen Stellspindel *(73)* ist.

5. Druckluftbetätigte Scheibenbremse nach Anspruch 4, ***dadurch gekennzeichnet***, daß der Unterschied im Steigungsmaß der beiden Stellspindeln *(72, 73)* so gewählt ist, daß sich die auslaufseitig befindliche Stellspindel *(72)* - bezogen auf den vollen Stellweg - um ca. 1 mm weiter bewegt.

## Claims

1. Compressed air operated disc brake having a calliper (2) embracing a brake disc (1), there being arranged on one side of the calliper (2) a clamping device (3) which, when acted upon by compressed air, actuates two adjusting spindles (72, 73) which are arranged for movement in a parallel arrangement and which act on a brake block (10) by way of a respective thrust piece (70, 71) seated on the spindle end located on the brake disc side, the brake block (10) being supported for displacement relative to the brake disc (1) on the clamping side in the calliper (2), and which are coupled together in a rotationally fixed manner by way of a synchronising device (75), wherein an adjusting device (74) acts on one (72) of the two adjusting spindles (72, 73) in such a way that the air play, which changes as a result of wear of the lining, remains substantially constant, characterised in that the synchronising device (75) couples the two adjusting spindles (72, 73) in such a way that, from the brake disc (1), the spacing of the adjusting spindle (72) located on the outgoing side relative to the direction of rotation of the brake disc (1) is smaller than the spacing of the other adjusting spindle (73) by a predetermined amount.

2. Compressed air operated disc brake according to claim 1, characterised in that there is provided a manually operated adjusting device by means of which the size of the variable spacing of the two adjusting spindles (72, 73) can be adjusted.

3. Compressed air operated disc brake according to claim 2, characterised in that a scale is provided for indicating the size of the variable spacing of the two adjusting spindles (72, 73) that is set in each case by means of the adjusting device.

4. Compressed air operated disc brake according to one of the preceding claims, in particular according to the preamble of claim 1, characterised in that the pitch of the thread of the adjusting spindle (72) located on the outgoing side, relative to the direction of rotation of the brake disc (1), is larger than the pitch of the thread of the other adjusting spindle (73) by a predetermined amount.

5. Compressed air operated disc brake according to claim 4, characterised in that the difference of the pitch size of the two adjusting spindles (72, 73) is selected so that the adjusting spindle (72) located on the outgoing side moves approximately 1 mm further, relative to the total adjusting distance.

## Revendications

1. Frein à disque actionné par air comprimé, comprenant un étrier de frein (2) qui enserre un disque de frein (1) et sur un côté duquel est agencé un dispositif de serrage (3), qui, lors de l'application d'une charge en air comprimé, actionne deux broches de réglage (72,73) qui sont disposées parallèlement l'une à l'autre et de manière à être réglables et qui agissent chacune, par l'intermédiaire d'un élément de serrage (70,71) monté sur leur extrémité située du côté du disque de frein, sur une mâchoire de frein (10) qui est déplaçable, côté serrage, dans l'étrier de frein (2) par rapport au disque de frein (1), et qui sont accouplées entre elles, avec blocage en rotation, par l'intermédiaire d'un dispositif de synchronisation (75), un dispositif de rattrapage de jeu (74) agissant sur l'une (72) des deux broches de réglage (72,73) de telle sorte que le jeu, qui varie en raison d'une usure des garnitures, reste essentiellement constant,
caractérisé en ce
que le dispositif de synchronisation (75) accouple les deux broches de réglage (72,73) de telle sorte que la distance, par rapport au disque de frein (1), de la broche de réglage (72) située sur le côté sortie par rapport au sens de rotation du disque de frein (1), est inférieure, d'une valeur prédéterminée, à la distance de l'autre broche de réglace (73).

2. Frein à disque actionné par air comprimé suivant la revendication 1, caractérisé par le fait qu'il est prévu un dispositif de réglage pouvant être actionné manuellement et à l'aide duquel on peut ajuster la valeur de la distance variable des deux broches de réglage (72,73).

3. Frein à disque actionné par air comprimé suivant la revendication 2, caractérisé par le fait qu'il est prévu une échelle servant à indiquer la valeur de la distance variable des deux broches de réglage (72,73), qui est réglée respectivement au moyen du dispositif de réglage.

4. Frein à disque actionné par air comprimé suivant l'une des revendications précédentes, notamment suivant le préambule de la revendication 1, caractérisé par le fait que le pas du filetage de la broche de réglage (72), située sur le côté sortie dans le sens de rotation du disque de frein (1), est supérieur, d'une valeur prédéterminée, au pas du filetage de l'autre broche de réglage (73).

5. Frein à disque actionné par air comprimé suivant la revendication 4, caractérisé par le fait que la différence entre les pas des deux broches de réglage (72,73) est choisie de telle sorte que la broche de réglage (72), qui est située sur le côté sortie, est déplacée d'une distance supplémentaire d'environ 1 mm, rapportée à la course totale de réglage.
